# EUROPEAN PATENT APPLICATION

(11) **EP 3 618 192 A1**
(43) Date of publication of application: **04.03.2020**
(21) Application number: 18836092.9
(22) Date of filing: 05.06.2018
(51) Int. Cl.: H01R 9/16, F04B 39/00, F04C 29/00, H02K 5/22, F04B 35/04

(54) **HERMETIC TERMINAL, TERMINAL BLOCK, HERMETIC TERMINAL UNIT, AND COMPRESSOR**

(30) Priority: 20.07.2017 JP 2017140882
(71) Applicant: Mitsubishi Heavy Industries Thermal Systems, Ltd., Tokyo 108-8215 (JP)
(72) Inventor: TAKASU, Yogo, Tokyo 108-8215 (JP); SATO, Hajime, Tokyo 108-8215 (JP); TANIGUCHI, Masahiro, Tokyo 108-8215 (JP); TAKAHASHI, Kazuki, Tokyo 108-8215 (JP)
(74) Representative: Studio Torta S.p.A.
(86) International application number: PCT/JP2018/021482
(87) International publication number: WO 2019/017096

(57) **Abstract**

The purpose of the present invention is to provide: a hermetic terminal that allows the size of a connection part or a cable to be increased without increasing the size of a hermetic terminal unit; a terminal block; a hermetic terminal unit; and a compressor. This hermetic terminal unit (3) is provided with a hermetic terminal (1) and a terminal block (2). External cables (16) connected to connection parts (121) provided on straps provided at one end of a plurality of pins (13) fixed to the hermetic terminal (1), are spaced apart from each other in the height direction, whereby three-dimensional routing is facilitated when attaching the external cables (16) to the connection parts (121), and the sizes of the straps or the external cables (16) can be increased without increasing the size of the hermetic terminal unit (3).

## Description

### Technical Field

The present invention relates to a hermetic terminal, a terminal block, a hermetic terminal unit, and a compressor.

### Background Art

A hermetic terminal is known as a means for supplying power into a housing of a compressor, which requires a hermetic state. This hermetic terminal supplies external power into the housing via a connection portion where an external cable and the hermetic terminal are connected to each other.

In this case, a method is disclosed as follows. In order to facilitate a layout of the external cable, the external cable is extended in any desired direction by changing a location of the connection portion in a planar manner (refer to PTL 1).

### Citation List

### Patent Literature

[PTL 1] Japanese Unexamined Patent Application Publication No. 2012-82776

### Summary of Invention

### Technical Problem

A compressor tends to decrease in size and increase in capacity. As a result, a current flowing to a cable or a connection terminal which supplies external power inevitably increases. Therefore, it is necessary to enlarge a power supply diameter of the cable. In this case, it is necessary to provide a hermetic terminal unit into which a thick cable is inserted, thereby causing a possibility that the hermetic terminal unit may increase in size.

The present invention is made in view of these circumstances, and an object thereof is to provide a hermetic terminal, a hermetic terminal unit, and a compressor, which can cope with a size increase in a connection portion or a cable to be connected to an external cable, without causing the hermetic terminal unit to increase in size.

### Solution to Problem

In order to solve the above-described problem, a hermetic terminal, a terminal block, a hermetic terminal unit, and a compressor according to the present invention adopt the following means.

That is, according to an aspect of the present invention, there is provided a hermetic terminal including an insulation portion formed of an insulation material, a plurality of conductive pins fixed so as to be inserted into the insulation portion, and disposed so that both ends including one end and the other end project from the insulation portion, and straps respectively fixed to the one end of the respective pins, and respectively having a connection portion to be connected to an external cable. The connection portion of one of the straps has a different projecting height projecting from the insulation portion, compared to the connection portion of another strap.

The hermetic terminal has the plurality of conductive pins fixed to the insulation portion so that both ends project from the insulation portion. The strap having the connection portion connected to the external cable is fixed to one end of the respective pins.

The connection portion of one strap has the different projecting height projecting from the insulation portion, compared to the connection portion of the other strap. In this manner, the connection portion of one strap and the connection portion of the other strap can be separated from each other in a projecting height direction. Accordingly, a three-dimensional layout is facilitated when the external cable is attached to the connection portion. That is, when the strap or the cable increases in size, a space for installing the strap or the cable can be secured not only in a planar manner but also in a three-dimensional manner. Therefore, it is not necessary to increase an interval between the pins. The strap or the cable can increase in size, without causing the hermetic terminal to increase in size.

In addition, a length of at least one pin out of the respective pins may be different from a length of another pin.

The length of one pin out of the plurality of pins inserted into the insulation portion is different from the length of the other pin. In this manner, the connection portion of the strap fixed to one end of one pin and the connection portion of the strap fixed to one end of the other pin can be separated from each other in the projecting height direction.

In addition, in the insulation portion, the projecting height projecting from the insulation portion of the one end of at least one pin out of the respective pins may be different from the projecting height of the one end of another pin.

The projecting height of one end of one pin out of the plurality of pins inserted into the insulation portion is different from the projecting height of one end of the other pin. In this manner, the connection portion of the strap fixed to one end of one pin and the connection portion of the strap fixed to one end of the other pin can be separated from each other in the projecting height direction.

The length of the respective pins may be uniform or not uniform. In a case where the length of the respective pins is uniform, only one type of the pin may be prepared. Therefore, the number of components can be reasonably reduced.

In addition, a length in an insertion direction of the pin of at least the one strap out of the respective straps may be different from a length in an insertion direction of the pin of the other strap.

The length in the insertion direction of the pin of one strap out of the respective straps fixed to one end of the plurality of pins inserted into the insulation portion is different from the length in the insertion direction of the other strap. In this manner, the connection portion of one strap and the connection portion of the other strap can be separated from each other in the projecting height direction, without changing the projecting height projecting from the insulation portion of the pin

According to another aspect of the present invention, there is provided a terminal block including a plurality of through-holes into which a plurality of straps are respectively inserted, and a plurality of strap mounting surfaces on which the external cable is placed, and on which the respective straps and the external cable are mounted. An inclination angle of at least one strap mounting surface out of the respective strap mounting surfaces is different from an inclination angle of another strap mounting surface.

The inclination angle of at least one strap mounting surface out of the respective strap mounting surfaces disposed in the terminal block is different from the inclination angle of the other strap mounting surface. The external cables are placed along the respective inclined strap mounting surfaces. Accordingly, the external cables can be separated from each other in a height direction in each extending destination of the external cables. Therefore, a space for installing the cable can be secured not only in a planar manner but also in a three-dimensional manner. A three-dimensional layout of the external cables is facilitated.

According to still another aspect of the present invention, there is provided a hermetic terminal unit including the above-described hermetic terminal, a plurality of through-holes fixed to the hermetic terminal, and into which the respective straps are inserted, and a terminal block having a plurality of strap mounting surfaces on which the respective straps are mounted. A height of at least one strap mounting surface out of the respective strap mounting surfaces is different from a height of another strap mounting surface, and the respective projecting heights of the connection portions are set by the respective strap mounting surfaces.

The hermetic terminal unit includes the hermetic terminal, and the terminal block where the height of at least one strap mounting surface out of the strap mounting surfaces on which the respective straps are mounted is different from the height of the other strap mounting surface. In this manner, the connection portion of one strap and the connection portion of the other strap are aligned with each other in a state where both of these are separated from each other in the projecting height direction. Both of these are connected to the external cable on the strap mounting surface.

According to still another aspect of the present invention, there is provided a hermetic terminal unit including the above-described terminal block, and a hermetic terminal having an insulation portion formed of an insulation material, a plurality of conductive pins fixed so as to be inserted into the insulation portion, and disposed so that both ends including one end and the other end project from the insulation portion, and straps respectively fixed to the one end of the respective pins, and respectively having a connection portion to be connected to an external cable. The respective inclination angles of the connection portions are set by the respective strap mounting surfaces.

The hermetic terminal is included in the terminal block in which the inclination angle of at least the one strap mounting surface out of the respective strap mounting surfaces is different from the inclination angle of the other strap mounting surface. In this manner, the external cables can be separated from each other in the height direction by the inclination angles of the strap mounting surfaces. Accordingly, a three-dimensional layout of the external cables is facilitated without changing the dimensions of the pin or the strap included in the hermetic terminal.

In the hermetic terminal unit according to the aspect of the present invention, in a case where the respective straps are planarly viewed in an insertion direction in which the respective pins included in the hermetic terminal are inserted into the insulation portion, the respective connection portions to be disposed in the respective straps are bent so as to have the inclination angle facing a side in one direction.

In a case where the respective straps are planarly viewed, the respective connection portions disposed in the respective straps fixed to each one end of the respective pins inserted into the insulation portion are bent so as to have the inclination angle facing a side in one direction. In this manner, a space can be secured on a side opposite to the side in one direction in which the connection portions are bent. A three-dimensional layout is facilitated when the external cable is attached to the connection portion.

According to still another aspect of the present invention, there is provided a compressor including the above-described hermetic terminal unit.

The compressor includes the above-described hermetic terminal unit. In this manner, electricity can be supplied while the strap or the cable can increase in size without causing the hermetic terminal to increase in size.

### Advantageous Effects of Invention

According to the hermetic terminal, the terminal block, the hermetic terminal unit, and the compressor of the present invention, the three-dimensional layout is facilitated when the external cable is attached to the connection portion. The present invention can cope with a size increase in the connection portion or the cable, without causing the hermetic terminal unit to increase in size.

### Brief Description of Drawings

Fig. 1 is a front view illustrating a hermetic terminal according to a first embodiment of the present invention.
Fig. 2 is a plan view illustrating the hermetic terminal in Fig. 1.
Fig. 3 is a plan view illustrating a terminal block paired with the hermetic terminal in Fig. 1.
Fig. 4 is a front view illustrating the terminal block in Fig. 3.
Fig. 5 is a plan view illustrating a hermetic terminal unit in a state where a strap of the hermetic terminal in Fig. 1 is bent.
Fig. 6 is a front view illustrating the hermetic terminal unit in Fig. 5.
Fig. 7 is a front view illustrating a hermetic terminal according to a second embodiment of the present invention.
Fig. 8 is a front view illustrating a hermetic terminal according to a third embodiment of the present invention.
Fig. 9 is a plan view illustrating a terminal block according to a fourth embodiment of the present invention.
Fig. 10 is a front view illustrating the terminal block according to the fourth embodiment of the present invention.
Fig. 11 is a sectional view taken along a cutting plane line A-A in Fig. 9.
Fig. 12 is a sectional view taken along a cutting plane line B-B in Fig. 9.
Fig. 13 is a plan view illustrating a hermetic terminal unit in a state where a strap of a hermetic terminal according to a fifth embodiment of the present invention is bent.
Fig. 14 is a front view illustrating the hermetic terminal unit in Fig. 13.
Fig. 15 is a side view illustrating a compressor including the hermetic terminal.

### Description of Embodiments

Hereinafter, a hermetic terminal, a terminal block, a hermetic terminal unit, and a compressor according to an embodiment of the present invention will be described with reference to the drawings.

### [First Embodiment]

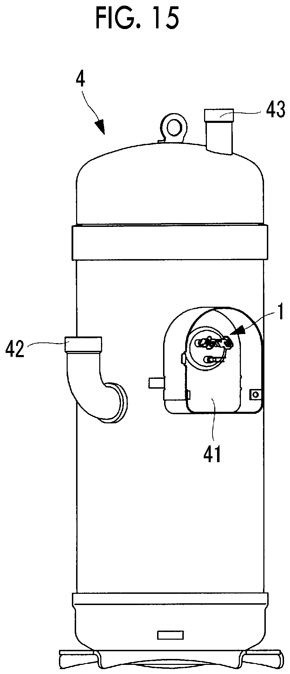

Fig. 15 illustrates a compressor 4 to which a hermetic terminal 1A is attached. For example, the compressor 4 is a scroll compressor, and is used as an apparatus configuring a refrigeration cycle of an air conditioner. Inside a metal housing 41 of the compressor 4, there are provided a compressing mechanism including a fixed scroll and a turning scroll, and an electric motor for driving the turning scroll. The compressor 4 causes the compressing mechanism to compress a refrigerant suctioned from a suction pipe 42, and discharges the compressed refrigerant outward of a discharge port 43. The hermetic terminal 1A is used in order to supply power to the electric motor inside the compressor 4 filled with the refrigerant.

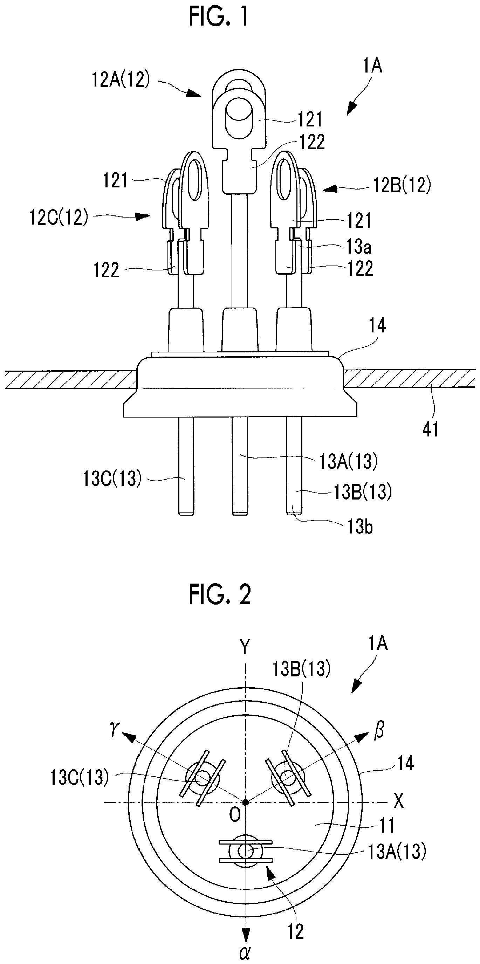

As illustrated in Fig. 1, the hermetic terminal 1A includes a casing 14 fixed to a housing 41 of the compressor 4, an insulation portion 11 (refer to Fig. 2) disposed inside the casing 14, and three pins 13 fixed to the insulation portion 11. The three pins 13 correspond to each phase of a three-phase power supply. In Fig. 1, a lower side of the housing 41 is an inner side of the compressor 4, that is, a refrigerant side, and an upper side of the housing 41 is an outer side of the compressor 4, that is, an atmosphere side.

For example, the casing 14 is formed in a cylindrical shape having a circular cross section. The insulation portion 11 is formed so that the casing 14 is internally filled with an insulation material such as resin or glass and the insulation material is solidified inside the casing 14.

The respective pins 13 have a shape of a rod made of a conductive material such as metal, and is fixed to the insulation portion 11 in a state of being separated from each other. The vicinity of an intermediate portion in a longitudinal direction of the respective pins 13 is fixed to the insulation portion 11. In this manner, both ends including one end 13a (upper end in Fig. 1) and the other end 13b (lower end in Fig. 1) of the pin 13 project from the insulation portion 11.

A strap 12 is fixed to one end 13a of the pin 13. The strap 12 includes a connection portion 121 located above one end 13a of the pin 13, and a fixing portion 122 fixed to one end 13a of the pin 13. An external cable 16 (to be described later) serving as a power supply side is connected to the connection portion 121. The fixing portion 122 is fixed to one end 13a of the pin 13 by means of welding. In this manner, the strap 12 and the pin 13 are integrated with each other, and are electrically connected to each other.

A length of a first pin 13A out of the plurality of pins 13 is longer than each length of the other second pin 13B and the other third pin 13C. In this manner, one end 13a of the first pin 13A is located above one end 13a of the second and third pins 13B and 13C. As a result, a first strap 12A attached to the first pin 13A is located above the second and third straps 12B and 12C attached to the second and third pins 13B and 13C.

In the following description, in a case where it is necessary to distinguish the pins 13 from each other, the reference numerals 13A, 13B, and 13C will be used. In a case where items are common to the respective pins 13, the reference numeral 13 will be simply used. The same manner will be used for the reference numerals 12A, 12B, and 12C attached to the strap 12.

The other end 13b of the pin 13 is electrically connected to an electric motor disposed inside the housing 41. In this manner, power can be supplied in a state where the electric motor is electrically isolated from the housing 41 having conductivity.

As illustrated in Fig. 2, in a case where the hermetic terminal 1A is planarly viewed, when directions toward the respective pins 13 from a center point O of the insulation portion 11 are respectively set as α, β, and γ, the respective pins 13 and the respective straps 12 are disposed so that width directions of the respective straps 12 are substantially orthogonal to the respective directions α, β, and γ and angles mutually formed by the respective directions α, β, and γ are substantially equal to each other, that is, so that the respective directions α, β, and γ have the mutually same interval of 120°. In Fig. 2, out of a horizontal center line X extending in a horizontal direction through a center point O and a vertical center line Y extending in a vertical direction, a downward direction of the vertical center line Y is set as a direction α.

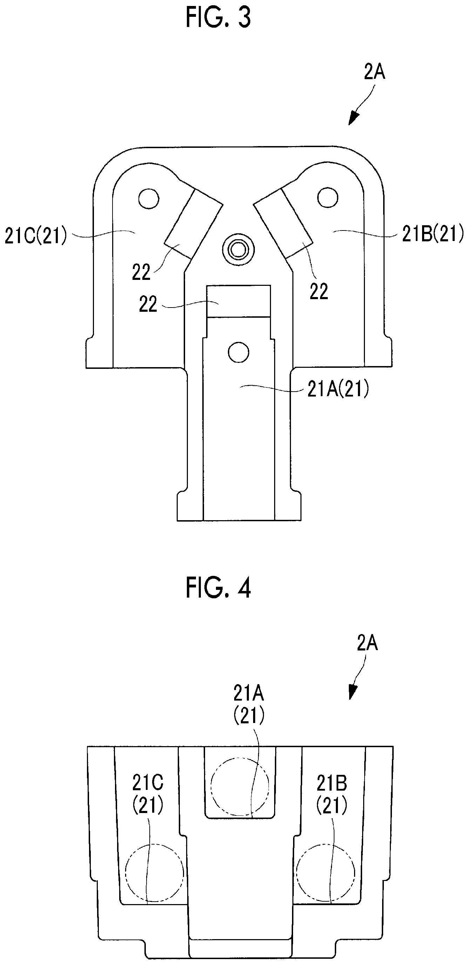

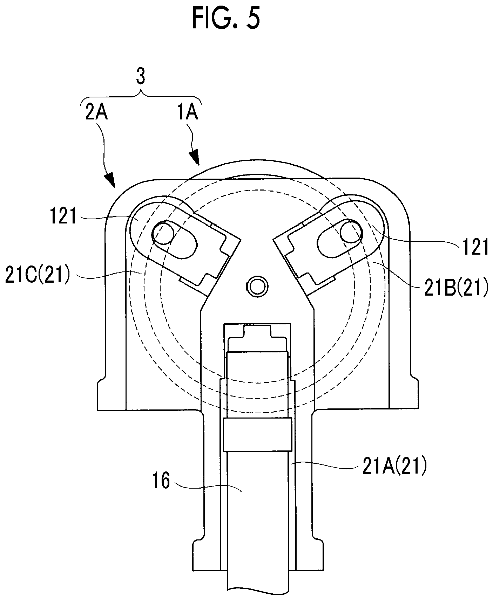

Fig. 3 illustrates a terminal block 2A to which the above-described hermetic terminal 1A is connected. The terminal block 2A has three through-holes 22 respectively having a rectangular cross section, and the respective straps 12 are inserted into the respective through-holes 22. In addition, the terminal block 2A has three strap mounting surfaces 21, and the respective connection portions 121 disposed in the respective straps 12 are bent toward the respective strap mounting surfaces 21 (refer to Fig. 5).

In a case where it is necessary to distinguish the strap mounting surfaces 21, the reference numerals 21A, 21B, and 21C will be used. In a case where items are common to the respective strap mounting surfaces 21, the reference numeral 21 will be simply used. Here, the strap mounting surface 21 corresponding to the first strap 12A is set as the first strap mounting surface 21A, the strap mounting surface 21 corresponding to the second strap 12B is set as the second strap mounting surface 21B, and the strap mounting surface 21 corresponding to the third strap 12C is set as the third strap mounting surface 21C.

As illustrated in Fig. 5, the terminal block 2A is attached to the hermetic terminal 1A, thereby configuring the hermetic terminal unit 3.

Tip sides (respective connection portions 121) of the respective straps 12 projecting from the respective through-holes 22 are bent in the respective directions α, β, and γ (refer to Fig. 2). In this manner, the respective connection portions 121 of the respective bent straps 12 are arranged radially toward the respective directions α, β, and γ. In a state of being placed on the strap mounting surfaces 21 disposed in the terminal block 2A, the respective bent connection portions 121 are connected to the external cable 16 by using a fastener such as a screw (not illustrated) (A connection state is illustrated by the first strap mounting surface 21A in Fig. 5). In this manner, the hermetic terminal unit 3 and the external cable 16 are integrated with each other. The power can be supplied from the external cable 16 into the housing 41 of the compressor 4.

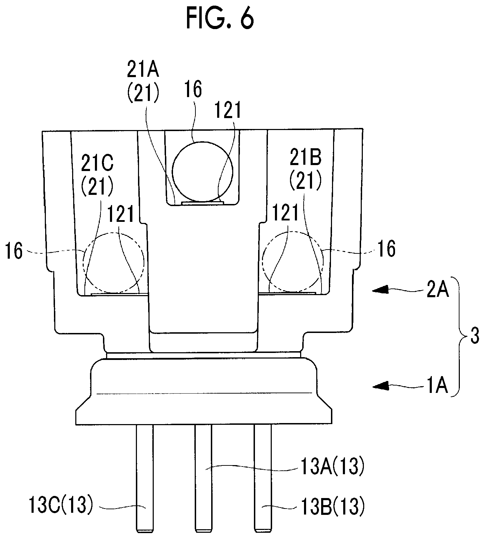

As illustrated in Figs. 4 and 6, the first strap 12A is disposed at a position having a projecting height than the second and third straps 12B and 12C. Accordingly, the first strap mounting surface 21A corresponding to the first strap 12A is set to be located at a higher position than the second and third strap mounting surfaces 21B and 21C corresponding to the second and third straps 12B and 12C. Then, the height of the external cable 16 is set by the respective strap mounting surfaces 21.

According to the present embodiment, the following operation effect is achieved.

The length of the first pin 13A out of the plurality of pins 13 is set to be different from the length of the second and third pins 13B and 13C. In this manner, the projecting height of the connection portion 121 corresponding to the first pin 13A out of the projecting heights of the external cables 16 connected to the respective connection portions 121 of the respective straps 12 fixed to one end 13a of the plurality of pins 13 is different from the projecting height of the connection portion 121 corresponding to the second and third pins 13B and 13C. Accordingly, the connection portions 121 can be separated from each other in the projecting height direction. Therefore, an interval between the connection portions 121 increases as much as a separated interval in the projecting height direction. Accordingly, the interval between the external cables 16 connected to the respective connection portions 121 also increases. Therefore, compared to a case where both of these are not separated from each other in the projecting height direction, a three-dimensional layout of the external cables 16 having the enlarged power supply diameter is facilitated. That is, when the strap 12 or the external cable 16 increases in size, a space for installing the strap 12 or the external cable 16 can be secured not only in a planar manner but also in a three-dimensional manner. In this manner, the strap 12 or the external cable 16 can increase in size, without increasing the interval between the pins 13.

An arrangement of the pins 13 and the straps 12 when the hermetic terminal 1A is planarly viewed may be appropriately changed without being limited to the above-described arrangement.

### [Second Embodiment]

Next, a hermetic terminal 1B according to a second embodiment of the present invention will be described. The present embodiment is different from the first embodiment in that a form of the pin 13 projecting from the insulation portion 11 is different. Other points are the same as those according to the first embodiment. Therefore, only points different from those according to the first embodiment will be described, and other points will be omitted in the description by using the same reference numerals.

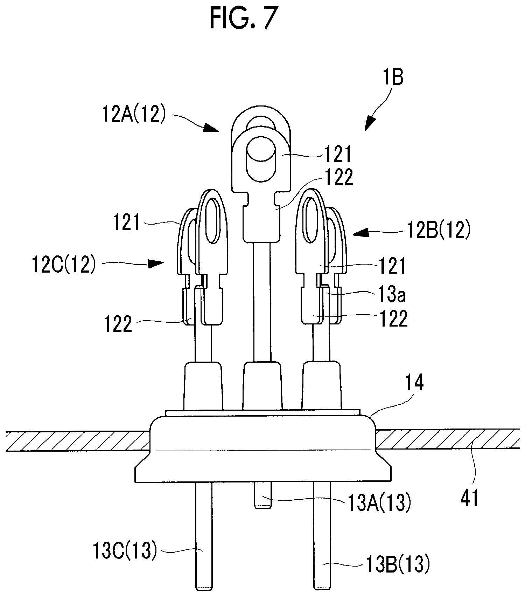

Fig. 7 illustrates the hermetic terminal 1B according to the second embodiment. The lengths of the respective pins 13 are substantially the same as each other. Fixing positions where the pins 13 are fixed to the insulation portion 11 are set to be different between the first pin 13A and the second and third pins 13B and 13C. Specifically, the pins 13 are fixed to the insulation portion 11 so that the projecting height of the first pin 13A is higher than the projecting height of the second and third pins 13B and 13C.

According to the present embodiment, the following advantageous effect is achieved.

The length of the respective pins 13 is uniform. Accordingly, only one type of the pin may be prepared. Therefore, while the number of components is reasonably reduced, the connection portions 121 corresponding to the respective pins 13 can be separated from each other in the projecting height direction.

### [Third Embodiment]

Next, a hermetic terminal 1C according to a third embodiment of the present invention will be described. The present embodiment is different from the first embodiment or the second embodiment in that a form of the strap 12 fixed to one end 13a of the pin 13 is different. Other points are the same as those according to the first embodiment and the second embodiment. Therefore, only points different from those according to the first embodiment and the second embodiment will be described, and other points will be omitted in the description by using the same reference numerals.

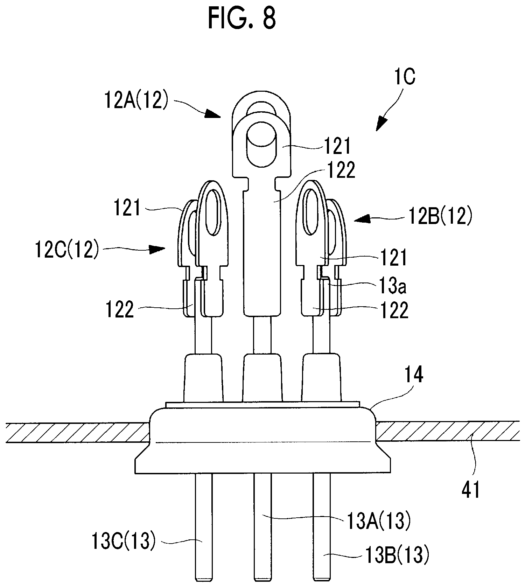

Fig. 8 illustrates the hermetic terminal 1C according to the third embodiment. The length of the first strap 12A corresponding to the first pin 13A is longer than the second and third straps 12B and 12C corresponding to the second and third pins 13B and 13C.

Therefore, according to the present embodiment, regardless of the length of the first pin 13A or the fixing position in the projecting direction, the projecting height of the connection portion 121 corresponding to the first pin 13A, and the projecting height of the connection portion 121 corresponding to the second and third pins 13B and 13C can be separated from each other in the projecting height direction.

### [Fourth Embodiment]

Next, a hermetic terminal unit according to a fourth embodiment of the present invention will be described. The height of the first strap mounting surface 21A corresponding to the first strap 12A out of the respective strap mounting surfaces 21 disposed in a terminal block 2B attached to a hermetic terminal unit according to the present embodiment is different from the height of the second and third strap mounting surfaces 21B and 21C corresponding to the second and third straps 12B and 12C.

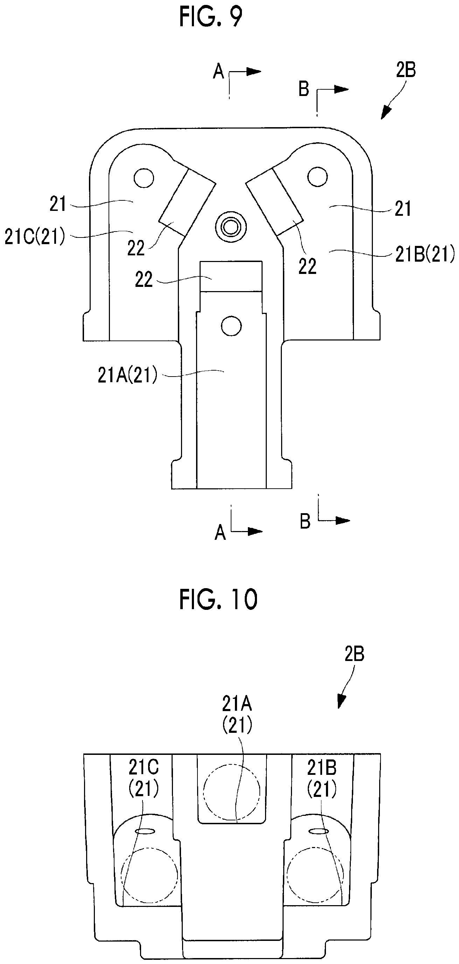

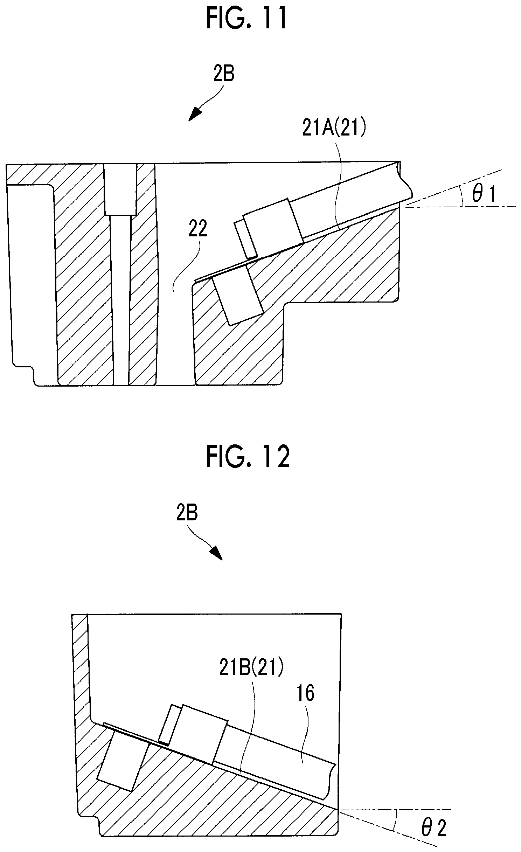

Fig. 9 illustrates the terminal block 2B attached to the hermetic terminal unit according to the fourth embodiment. Fig. 10 illustrates a front view of the terminal block 2B. Fig. 11 illustrates a sectional view taken along a cutting plane line A-A in Fig. 9. Fig. 12 illustrates a sectional view taken along a cutting plane line B-B in Fig. 9.

The first strap mounting surface 21A illustrated in Fig. 11 has an inclination angle θ1 with respect to a horizontal plane. On the other hand, the second strap mounting surface 21B illustrated in Fig. 12 has an inclination angle θ2 different from θ1 with respect to the horizontal plane. That is, the inclination angle varies for each of the strap mounting surfaces 21. Then, the external cables 16 are placed on the first and second strap mounting surfaces 21A and 21B. For example, as illustrated in Fig. 11, the first strap mounting surface 21A is inclined so that an end portion side (right side in the drawing) faces upward with respect to the horizontal plane. As illustrated in Fig. 12, the second strap mounting surface 21B and the third strap mounting surface 21C are inclined so that an end portion side (right side in the drawing) faces downward with respect to the horizontal plane. All of the respective strap mounting surfaces 21A, 21B, and 21C may face upward or downward.

However, it is preferable that the strap mounting surfaces 21A, 21B, and 21C have the equal height position of the upper end of the through-hole 22 into which the pin 13 is inserted. In this manner, it is possible to use a commonly available hermetic terminal having the equal length of the respective pins 13.

As illustrated in Fig. 10, the inclination angle of the respective strap mounting surfaces 21 is set so that the first strap mounting surface 21A corresponding to the first strap 12A is located at a higher position than the second and third strap mounting surfaces 21B and 21C corresponding to the second and third straps 12B and 12C. In this manner, the external cables 16 placed on the respective strap mounting surfaces 21 can be separated from each other in the height direction.

According to the present embodiment, as in the first embodiment to the third embodiment, the heights of the external cables 16 can be separated from each other by using the inclination angles of the strap mounting surfaces 21 without changing dimensions of components configuring the hermetic terminal 1.

### [Fifth Embodiment]

Next, a hermetic terminal unit 3E according to a fifth embodiment of the present invention will be described. The present embodiment is different from the first to fourth embodiments in that the direction of the bent connection portion 121 disposed in the strap 12 fixed to one end 13a of the pin 13 is different. Other points are the same as those according to the first embodiment to the fourth embodiment. Therefore, only points different from those according to the first embodiment to the fourth embodiment will be described, and other points will be omitted in the description by using the same reference numerals.

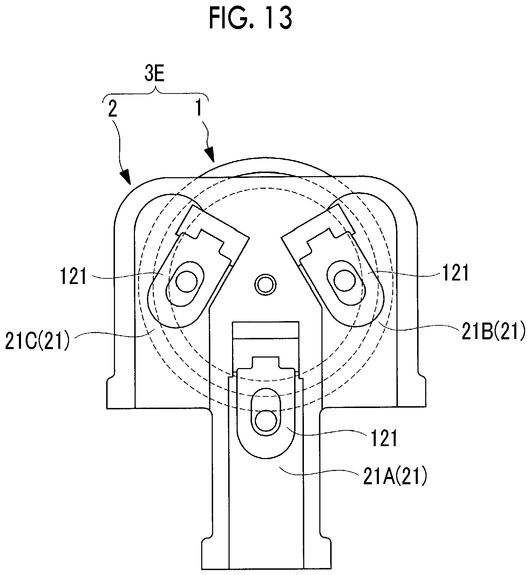

Fig. 13 illustrates the hermetic terminal unit 3E according to the present embodiment. The respective connection portions 121 are bent so as to have the inclination angle facing a side in one direction (downward direction in the drawing) in a case where the respective connection portions 121 are planarly viewed as illustrated in the drawing. Specifically, the other connection portion 121 is bent in a substantially C shape so as to have the inclination angle on a side in a direction α (refer to Fig. 2) where the connection portion 121 fixed to the first pin 13A is bent.

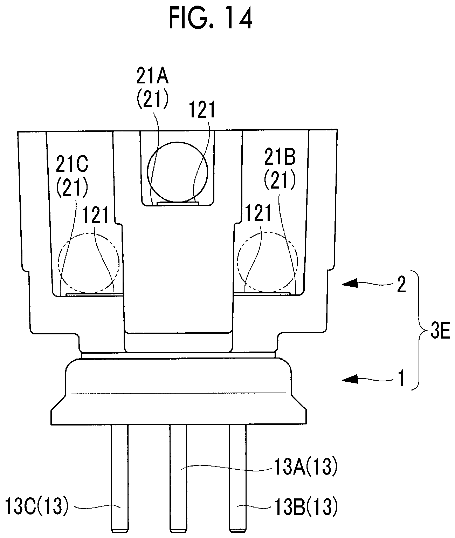

According to the present embodiment, a space can be secured on a side opposite to opposite to a side (side in the upward direction in the drawing) in the direction α in which the connection portion 121 disposed in the first strap 12A fixed to the first pin 13A is bent. A three-dimensional layout of the external cables 16 having the enlarged power supply diameter is facilitated. Fig. 14 illustrates a front view of the hermetic terminal unit 3E illustrated in Fig. 13.

The present embodiment can be combined with the first to fourth embodiments.

Here, in all of the embodiments, a height relationship between the respective strap mounting surfaces 21 may be appropriately changed without being limited to the above-described relationship. For example, the inclination angle may be set so that the first strap mounting surface 21A is located at a lower position than the second and third strap mounting surfaces 21B and 21C. Alternatively, the inclination angle may be set so that the heights of all of the strap mounting surfaces 21 are not uniform. In addition, as a matter of course, the dimension of the pin 13 or the strap 12 of the hermetic terminal can be correspondingly changed.

### Reference Signs List

- 1 (1A, 1B, 1C):: hermetic terminal
- 2 (2A, 2B):: terminal block
- 3 (3E):: hermetic terminal unit
- 4:: compressor
- 11:: insulation portion
- 12 (12A, 12B, 12C):: strap
- 13 (13A, 13B, 13C):: pin
- 13a:: one end
- 13b:: other end
- 14:: casing
- 16:: external cable
- 21 (21A, 21B, 21C):: strap mounting surface
- 22:: through-hole
- 41:: housing
- 121:: connection portion
- 122:: fixing portion

## Claims

1. A hermetic terminal comprising:
an insulation portion formed of an insulation material;
a plurality of conductive pins fixed so as to be inserted into the insulation portion, and disposed so that both ends including one end and the other end project from the insulation portion; and
straps respectively fixed to the one end of the respective pins, and respectively having a connection portion to be connected to an external cable,
wherein the connection portion of one of the straps has a different projecting height projecting from the insulation portion, compared to the connection portion of another strap.

2. The hermetic terminal according to claim 1,
wherein a length of at least one pin out of the respective pins is different from a length of another pin.

3. The hermetic terminal according to claim 1,
wherein in the insulation portion, the projecting height projecting from the insulation portion of the one end of at least one pin out of the respective pins is different from the projecting height of the one end of another pin.

4. The hermetic terminal according to claim 1,
wherein a length in an insertion direction of the pin of at least the one strap out of the respective straps is different from a length in an insertion direction of the pin of the other strap.

5. A terminal block comprising:
a plurality of through-holes into which a plurality of straps are respectively inserted; and
a plurality of strap mounting surfaces on which the respective straps are mounted,
wherein an inclination angle of at least one strap mounting surface out of the respective strap mounting surfaces is different from an inclination angle of another strap mounting surface.

6. A hermetic terminal unit comprising:
the hermetic terminal according to any one of claims 1 to 4;
a plurality of through-holes fixed to the hermetic terminal, and into which the respective straps are inserted; and
a terminal block having a plurality of strap mounting surfaces on which the respective straps are mounted,
wherein a height of at least one strap mounting surface out of the respective strap mounting surfaces is different from a height of another strap mounting surface, and the respective projecting heights of the connection portions are set by the respective strap mounting surfaces.

7. A hermetic terminal unit comprising:
the terminal block according to claim 5; and
a hermetic terminal having
an insulation portion formed of an insulation material,
a plurality of conductive pins fixed so as to be inserted into the insulation portion, and disposed so that both ends including one end and the other end project from the insulation portion, and
straps respectively fixed to the one end of the respective pins, and respectively having a connection portion to be connected to an external cable,
wherein the respective inclination angles of the connection portions are set by the respective strap mounting surfaces.

8. The hermetic terminal unit according to claim 6 or 7,
wherein in a case where the respective straps are planarly viewed in an insertion direction in which the respective pins included in the hermetic terminal are inserted into the insulation portion, the respective connection portions to be disposed in the respective straps are bent so as to have the inclination angle facing a side in one direction.

9. A compressor comprising:
the hermetic terminal unit according to any one of claims 6 to 8.
